# EUROPEAN PATENT APPLICATION

(11) **EP 4 108 452 A1**
(43) Date of publication of application: **28.12.2022**
(21) Application number: 21756982.1
(22) Date of filing: 01.02.2021
(51) Int. Cl.: B32B 27/00, B32B 27/20

(54) **DECORATIVE SHEET AND DECORATIVE PLATE**

(30) Priority: 20.02.2020 JP 2020027030
(71) Applicant: TOPPAN INC., Tokyo 110-0016 (JP)
(72) Inventor: ISEYA, Takahiro, Tokyo 110-0016 (JP)
(74) Representative: Hoffmann Eitle
(86) International application number: PCT/JP2021/003530
(87) International publication number: WO 2021/166618

(57) **Abstract**

There are provided a decorative sheet having excellent contamination resistance/tape resistance while maintaining high flaw resistance and a decorative plate. The decorative sheet includes: a base material; a matte layer formed on one surface of the base material; and a surface protective layer formed on the surface on the side of the matte layer of the base material, in which the matte layer and the surface protective layer are formed of an ultraviolet curable resin and the matte layer contains a spherical filler.

## Description

### Technical Field

The present invention relates to a decorative sheet and a decorative plate.

### Background Art

Conventionally, the low flaw resistance of a matte layer has been pointed out in a decorative sheet which expresses an embossed feeling by separately applying resins of the matte layer and reproduces a hand touch feeling.

To address the problem, a decorative sheet has been proposed which achieves high flaw resistance in addition to design properties and an excellent hand touch feeling by adding an inorganic filler with a limited particle size to a matte layer (see PTL 1, for example).

### Citation List

### Patent Literature

PTL 1: JP 2017-165030 A

### Summary of Invention

### Technical Problem

However, a decorative sheet in which the matte layer is a mixed resin of a urethane resin and an ultraviolet curable resin has been excellent in weather resistance but insufficient in contamination resistance and tape resistance.

The present invention has been made in view of the above-described circumstances. It is an object of the present invention to provide a decorative sheet having excellent contamination resistance/tape resistance while maintaining high flaw resistance and a decorative plate.

### Solution to Problem

In order to solve the above-described problem, a decorative sheet according to one aspect of the present invention includes: a base material; a matte layer formed on one surface of the base material; and a surface protective layer formed on the surface on the side of the matte layer of the base material, in which the matte layer and the surface protective layer are formed of an ultraviolet curable resin and the matte layer contains a spherical filler.

### Advantageous Effects of Invention

One aspect of the present invention can provide a decorative sheet having excellent contamination resistance/tape resistance while maintaining high flaw resistance and a decorative plate.

### Brief Description of Drawings

FIG. 1 is a cross-sectional view schematically illustrating one configuration example of a decorative sheet according to a first embodiment of the present invention; and
FIG. 2 is a cross-sectional view schematically illustrating one configuration example of a decorative plate according to a second embodiment of the present invention.

### Description of Embodiments

Hereinafter, a decorative sheet and a decorative plate according to one embodiment of the present invention will be described with reference to the drawings. Herein, the drawings are schematic, and the relationship between the thickness and the plane dimensions, ratios of the thickness of each layer, and the like are different from the actual relationship, ratios, and the like. The embodiments described below exemplify the configuration for embodying the technical idea of the present invention. The technical idea of the present invention does not specify materials, shapes, structures, and the like of constituent parts to the materials, shapes, structures, and the like described below. The technical idea of the present invention can be variously altered within the technical scope specified by Claims.

### <First embodiment>

### (Decorative sheet)

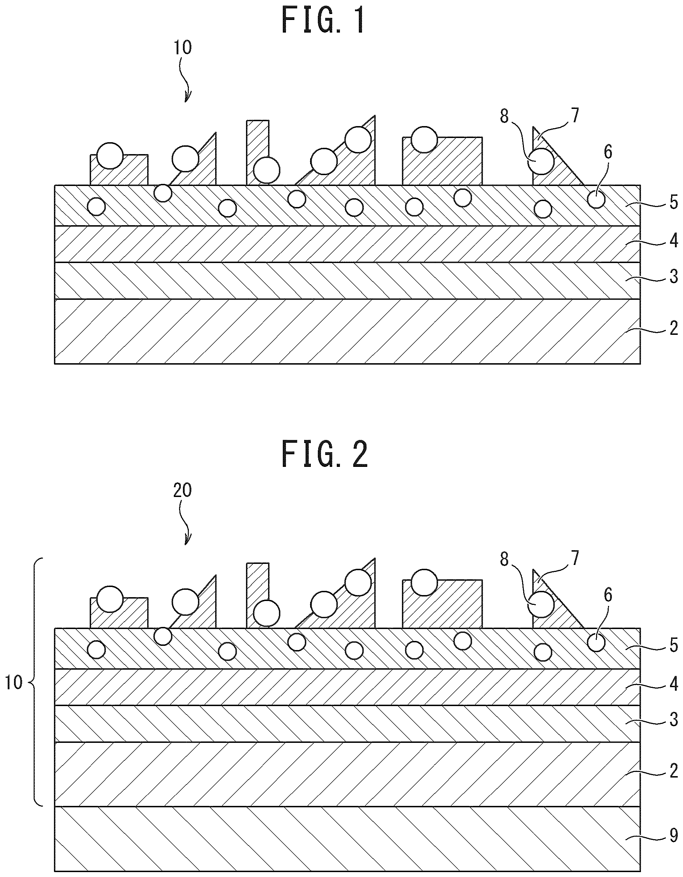

The basic configuration of a decorative sheet according to a first embodiment of the present disclosure is described with reference to FIG. 1. FIG. 1 is a cross-sectional view for explaining one configuration example of a decorative sheet 10 according to the first embodiment of the present disclosure.

As illustrated in FIG. 1, the decorative sheet 10 according to one embodiment of the present invention includes a base colored layer 3, a pattern layer 4, a matte layer 5, and a surface protective layer 7 deposited in this order on one surface side of a base material layer 2.

### (Base material layer)

The base material layer 2 serves as a base material of the decorative sheet 10. This embodiment describes a case where a base paper layer is used as the base material layer 2. As the base paper layer, a thin paper is used, for example. The thin paper is preferably formed with a basis weight of 20 g/m² or more and 100 g/m² or less, for example. Not only the thin paper but a titanium paper, a woodfree paper, a kraft paper, and the like are applicable to the base material layer 2 and selected as appropriate according to the intended use.

This embodiment gives an example of using only a paper base material as the base material layer 2, but the other configurations can be adopted. For example, a resin film is usable as the base material layer 2. Further, the base material layer 2 may have a deposited structure of the paper base material and a resin material.

When the base material layer 2 is the resin material, a thermoplastic resin represented by polypropylene, polyethylene, polyester, or the like is preferably used as the resin material. The thermoplastic resin may contain an inorganic material, such as titanium oxide or calcium carbonate, as an additive. The use of at least one of polypropylene, polyethylene, and polyester as the thermoplastic resin improves the dispersibility of the inorganic material. The use of polypropylene as the thermoplastic resin further improves the dispersibility of the inorganic material.

Further, when the base material layer 2 is the resin film, the resin film is preferably a film material mainly containing polyethylene terephthalate. The resin film may contain the inorganic materials mentioned above as an additive. When the base material layer 2 is the resin film, the base material layer 2 may be a uniaxially or biaxially oriented resin film. The base material layer 2 formed of the uniaxially or biaxially oriented resin film may contain pores inside.

### (Base colored layer)

The base colored layer 3 is a layer formed on the base material layer 2 and is a layer for imparting design properties by a desired hue to the decorative sheet 10 and concealing the color/pattern of a base to which the decorative sheet 10 is stuck. The base colored layer 3 is formed by solid printing or the like of ink, for example.

The base colored layer 3 is provided to cover the entire surface of the base material layer 2. The base colored layer 3 may be a multilayer of two or more layers as necessary, e.g., concealment.

A constituent material of the base colored layer 3 is not particularly limited. For example, a printing ink or a coating agent is usable which is obtained by dissolving and dispersing a matrix and a colorant, such as a dye or a pigment, in a solvent. As the matrix, various synthetic resins, such as oil-based nitrocellulose resin, two-component urethane resin, acrylic resin, styrene-based resin, polyester-based resin, urethane-based resin, polyvinyl-based resin, alkyd resin, epoxy-based resin, melamine-based resin, fluororesin, silicon-based resin, and rubber-based resin, or mixtures, copolymers, and the like thereof are usable. As the colorant, inorganic pigments, such as carbon black, titanium white, zinc white, red stuff, chrome yellow, iron blue, and cadmium red, organic pigments, such as azo pigments, lake pigments, anthraquinone pigments, phthalocyanine pigments, isoindolinone pigments, and dioxazine pigments, or mixtures thereof are usable, for example. As the solvent, toluene, xylene, ethyl acetate, butyl acetate, methyl alcohol, ethyl alcohol, isopropyl alcohol, acetone, methyl ethyl ketone, methyl isobutyl ketone, cyclohexanone, water, and the like, or mixtures thereof and the like are usable, for example.

The thickness of the base colored layer 3 may be such that the desired design properties are sufficiently developed. The thickness of the base colored layer 3 is preferably set in the range of 2 µm or more and 20 µm or less, for example. By setting the thickness of the base colored layer 3 within the range above, sufficient concealment can be developed for colors and stains of the base material layer 2 even when the base colored layer 3 is colored white or light color, for example, and sufficient durability can be obtained by preventing a reduction in the adhesion strength between ink layers constituting the base colored layer 3.

### (Pattern layer)

The pattern layer 4 is a layer formed on the base colored layer 3 and is a layer for adding a pattern for imparting design properties. As the pattern, a pattern suitable for a place where the decorative sheet 10 is used, such as wood grain, cork, stone grain, tile, pottery, and abstract patterns, can be selected, for example.

A constituent material of the pattern layer 4 is not particularly limited and the same material as that of the base colored layer 3 is usable, for example.

The thickness of the pattern layer 4 may be such that the desired design properties are sufficiently developed. The thickness of the pattern layer 4 is preferably set in the range of 0.1 µm or more and 10 µm or less, for example. Herein, the "thickness of the pattern layer 4" refers to the thickness of a part where ink is printed. The pattern layer 4 may not be provided on the entire surface of the base colored layer 3, and the base colored layer 3 may be exposed from the pattern layer 4. By setting the thickness of the pattern layer 4 within the range above, the pattern is clearly expressed or gradation is added to the pattern, so that design properties can be enhanced and, by printing a plurality of colors in an overlapping manner, so that an upper layer color and a lower layer color are overlapped on each other, the expressible hue range can be increased with limited colors.

### (Matte layer)

The matte layer 5 is a layer formed on the pattern layer 4 and a layer for covering the entire pattern layer 4. The matte layer 5 is formed of a transparent or a translucent material (for example, resin material) such that the base colored layer 3 and the pattern of the pattern layer 4 can be seen through the matte layer 5. More specifically, the matte layer 5 has light transmissivity.

As a material of the matte layer 5, the use of only an ultraviolet curable-type resin (UV curable resin) is preferable, for example. As described above, the matte layer 5 contains the ultraviolet curable-type resin having high hardness, and therefore the matte layer 5 exposed to the surface can improve the flaw resistance of the decorative sheet 10. As a solvent for dissolving the solid content of the ultraviolet curable-type resin, ethyl acetate or n-butyl acetate is usable.

As the ultraviolet curable-type resin, (meth)acrylic-based resin, silicon-based resin, polyester-based resin, urethane-based resin, amide-based resin, and epoxy-based resin are usable, for example.

To the ultraviolet curable-type resin forming the matte layer 5, a matting agent (gloss adjusting agent) is preferably added. As the matting agent, particles of inorganic matter, such as silica particles, alumina (a-alumina and the like), calcium carbonate, barium sulfate, kaolinite, and aluminosilicate, or particles of organic matter, such as polycarbonate, nylon, and urethane resin, are usable, for example. A first spherical filler 6 is an inorganic compound filler, such as silicon resin. The use of the inorganic compound filler is preferable in terms of hardness as compared with a case of using an organic compound filler, and an improvement of the hardness of a resin layer can be expected. This is because the flaw resistance is improved by the use of first spherical filler 6 for the matte layer 5.

In this embodiment, the first spherical filler 6 with such a particle size that the mean particle size is substantially equal to the layer thickness of the matte layer 5 is preferably added to the ultraviolet curable-type resin forming the matte layer 5. For example, when the thickness of the matte layer 5 is 7.0 µm, the mean particle size of the first spherical filler 6 is preferably 3.0 µm or more and 7.0 µm or less. This is because, by the use of the first spherical filler 6 with a particle size equal to or less than the layer thickness of the matte layer 5, the first spherical filler 6 is hardly peeled off from the matte layer 5. Herein, the "mean particle size" is a median diameter (D50 particle size) .

In this embodiment, the glossiness of the matte layer 5 is preferably 1.5 or more and 4.0 or less at an incident angle of 60°. Herein, the "glossiness" refers to glossiness measured by a specular glossiness measurement method according to JIS Z-8741. In this embodiment, a gloss difference between the matte layer 5 and the surface protective layer 7 realizes excellent design properties close to the actual wood grain. When the glossiness is 4.0 or less, excellent design properties can be realized due to the gloss difference between the matte layer 5 and the surface protective layer 7. From an empirical rule, it is unlikely that the glossiness of the matte layer 5 is less than 1.5.

As described above, by constituting the matte layer 5 using only the ultraviolet curable-type resin containing the first spherical filler 6 with a particle size substantially equal to the layer thickness of the matte layer 5, the decorative sheet 10 can be obtained which has excellent wear resistance/flaw resistance and in which the first spherical filler 6 is hardly peeled off.

### (Surface protective layer)

The surface protective layer 7 is a layer partially formed on the matte layer 5 and covering a part of the matte layer 5. This makes it possible to visually express wood grain vessels. The surface protective layer 7 is formed of a transparent or translucent material (resin) such that the pattern of the pattern layer 4 can be seen through the surface protective layer 7 and the matte layer 5. More specifically, the surface protective layer 7 has light transmissivity as in the matte layer 5. As described above, this embodiment has the transparent or translucent matte layer 5 and surface protective layer 7 on the pattern layer 4, and therefore the pattern of the pattern layer 4 can be seen from the outermost layer of the decorative sheet 10. Further, the surface protective layer 7 covering a part of the matte layer 5 is provided, and therefore the design properties of the decorative sheet 10 can be improved.

As a material of the surface protective layer 7, the use of only the ultraviolet curable-type resin (UV curable resin) is preferable, for example. Since the surface protective layer 7 contains the ultraviolet curable-type resin having high hardness, and therefore the hardness of the outermost surface layer of the decorative sheet 10 can be improved, and the surface physical properties, such as wear resistance, flaw resistance, and solvent resistance, of the decorative sheet 10 can be improved. As a solvent for dissolving the solid content of the ultraviolet curable-type resin, ethyl acetate or n-butyl acetate is usable. As the material of the surface protective layer 7, an ionizing radiation curable resin may be used in place of the ultraviolet curable-type resin.

Further, in this embodiment, a second spherical filler 8 with a mean particle size of 40 µm or more and 80 µm or less may be added to the ultraviolet curable-type resin forming the surface protective layer 7. By adding the second spherical filler 8 to the surface protective layer 7, the surface of the decorative sheet 10 can achieve a hand touch feeling close to the surface of a wooden board. As the second spherical filler 8, an acrylic filler or a urethane filler is preferably used, for example.

The surface protective layer 7 preferably covers 10% or more and 90% or less of the area of the matte layer 5. In this embodiment, the matte layer 5 is formed of a material having high flaw resistance or contamination resistance, and therefore, when the area of the surface protective layer 7 is 10% or more of the area of the matte layer 5, the flaw resistance or the contamination resistance of the decorative sheet 10 can be improved. Further, the matte layer 5 and the surface protective layer 7 are formed of the transparent or translucent material (resin) such that the pattern of the pattern layer 4 can be seen through. Therefore, even when the area of the surface protective layer 7 is 90% or less of the area of the matte layer 5, the design properties of the decorative sheet 10 are not impaired.

The shape of the surface protective layer 7 is not particularly limited and may be a definite shape in which a circle, a quadrangle, a hexagon, and the like are regularly arranged, or an indefinite pattern shape. Alternatively, a shape synchronized with the pattern of the pattern layer 4 may be acceptable, which can make the pattern look realistic.

Further, the surface of the surface protective layer 7, which is the outermost surface layer of the decorative sheet 10, may be embossed (irregular shape formation using an embossing plate) to form (impart) an embossed pattern. In this case, the embossed pattern formed on the surface of the surface protective layer 7 can achieve a configuration of giving a more three-dimensional feeling by the sense of touch. In the embossing, the irregular shape may be formed on the decorative sheet 10 by passing a recessed portion with a depth of 15 µm or more between an embossing roll and a rubber back roll having hardness of 50° or more and less than 90°, for example. Examples of a hardness measurement method include a measurement method described in JIS K-6253. Examples of the embossed pattern include wood grain board vessel channels, stone board surface irregularities, cloth surface texture, satin finish, grain, hairlines, hairline grooves, and the like.

### <Effects of first embodiment>

The decorative sheet 10 according to this embodiment has the following effects.
(1) In the decorative sheet 10 of this embodiment, the matte layer 5 and the surface protective layer 7 are formed of only the ultraviolet curable-type resin.
   According to this configuration, higher contamination resistance and tape resistance can be realized.
(2) In the decorative sheet 10 of this embodiment, the matte layer 5 has the first spherical filler 6.
   According to this configuration, higher weather resistance can be realized.
(3) In the decorative sheet 10 of this embodiment, the second spherical filler 8 is added to the surface protective layer 7.

According to this configuration, the sense of touch is improved.

### <Second embodiment>

A decorative plate according to a second embodiment of the present disclosure is described with reference to FIG. 2. FIG. 2 is a cross-sectional view for explaining one configuration example of a decorative plate 20 according to the second embodiment of the present disclosure.

### (Decorative plate)

As illustrated in FIG. 2, the decorative plate 20 according to one embodiment of the present invention is obtained by sticking the other surface of the base material layer 2 of the decorative sheet 10 described above to a base material for decorative plate 9. More specifically, the decorative plate 20 according to this embodiment contains the base colored layer 3, the pattern layer 4, the matte layer 5, and the surface protective layer 7 deposited in this order on one surface side of the base material layer 2 and is provided with the base material for decorative plate 9 on the other surface of base material layer 2.

### (Base material for decorative plate)

As the base material for decorative plate 9, the same ones used for conventional common decorative materials are usable. As a paper base material, thin paper, titanium paper, or impregnated paper may be used. Examples of a resin include polyolefin-based resins: polyolefin resins, such as polyethylene, polypropylene, polymethylpentene, polybutene, ethylene-propylene copolymer, ethylene-α-olefin copolymer, and propylene-α-olefin copolymer, or olefine-based copolymer resins, such as ethylene-vinyl acetate copolymer, ethylene-vinyl alcohol copolymer, ethylene-(meth)acrylic acid (ester) copolymer, and ethylene-unsaturated carboxylic acid copolymer metal neutralized product (ionomer); polyester-based resins, such as polyethylene terephthalate, polybutylene terephthalate, polytetramethylene terephthalate, polyethylene naphthalate, polyethylene terephthalate-isophthalate copolymer, 1,4-cyclohexanedimethanol copolymer polyethylene terephthalate, polyarylate, and polycarbonate; acrylic resins, such as poly(meth)acrylonitrile, polymethyl (meth)acrylate, polyethyl (meth)acrylate, polybutyl (meth) acrylate, and polyacrylamide; polyamide-based resins, such as 6-nylon, 6,6-nylon, and 6,10-nylon; styrene-based resins, such as polystyrene, AS resin, and ABS resin; vinyl-based resins, such as polyvinyl chloride, polyvinyl acetate, polyvinyl alcohol, polyvinyl acetal, and polyvinyl butyral; and fluorine resins, such as polyvinyl fluoride, polyvinylidene fluoride, polytetrafluoroethylene, ethylene-tetrafluoroethylene copolymer, and ethylene-perfluoroalkyl vinyl ether copolymer, or mixtures, copolymers, composites, deposited products, or the like of two or more thereof are usable, which is preferable.

### EXAMPLES

### [Example 1]

A nitrocellulose-based gravure printing ink was applied to the surface of a thin paper with a basis weight of 30 g/m², thereby forming a single-color base colored layer 3 by which the base was colored and concealment was imparted. Next, the nitrocellulose-based gravure printing ink was applied onto the base colored layer 3, a three-color wood grain pattern layer excluding a vessel pattern and a single-color vessel pattern layer synchronized with the wood grain pattern layer were sequentially printed, thereby forming the pattern layer 4. Subsequently, an ultraviolet curable resin containing a silicon-based filler (first spherical filler 6) with a mean particle size of 1.0 µm was applied onto the pattern layer 4 with a layer thickness of 7.0 µm and an application amount after drying of 3.0 g/m², thereby forming the matte layer 5. Finally, an ultraviolet curable resin was applied onto the matte layer 5 by a gravure method to cover 20% of the surface of the matte layer 5 in terms of the area ratio, thereby forming the surface protective layer 7.

Thus, a decorative sheet 10 of Example 1 was formed.

### [Example 2]

The mean particle size of the first spherical filler 6 contained in the matte layer 5 was set to 3.0 µm. Other than above, a decorative sheet 10 of Example 2 was produced with the same materials/procedure as those of Example 1.

### [Example 3]

The mean particle size of the first spherical filler 6 contained in the matte layer 5 was set to 8.0 µm. Other than above, a decorative sheet 10 of Example 3 was produced with the same materials/procedure as those of Example 1.

### [Example 4]

An acrylic filler (second spherical filler 8) was added to the surface protective layer 7 and the mean particle size of the second spherical filler 8 was set to 40 µm. Other than above, a decorative sheet 10 of Example 4 was produced with the same materials/procedure as those of Example 1.

### [Example 5]

The mean particle size of the first spherical filler 6 contained in the matte layer 5 was set to 3.0 µm. Other than above, a decorative sheet 10 of Example 5 was produced with the same materials/procedure as those of Example 4.

### [Example 6]

The mean particle size of the first spherical filler 6 contained in the matte layer 5 was set to 7.0 µm. Other than above, a decorative sheet 10 of Example 6 was produced with the same materials/procedure as those of Example 4.

### [Example 7]

The mean particle size of the first spherical filler 6 contained in the matte layer 5 was set to 8.0 µm. Other than above, a decorative sheet 10 of Example 7 was produced with the same materials/procedure as those of Example 4.

### [Example 8]

The acrylic filler contained in the surface protective layer 7 was changed to a urethane-based filler. Other than above, a decorative sheet 10 of Example 8 was produced with the same materials/procedure as those of Example 5.

### [Example 9]

As the surface protective layer 7, an ultraviolet curable resin was applied to occupy 1% of the surface of a decorative sheet in terms of the area ratio. Other than above, a decorative sheet 10 of Example 9 was produced with the same materials/procedure as those of Example 5.

### [Example 10]

As the surface protective layer 7, an ultraviolet curable resin was applied to occupy 95% of the surface of a decorative sheet in terms of the area ratio. Other than above, a decorative sheet 10 of Example 10 was produced with the same materials and procedure as those of Example 5.

### [Example 11]

The mean particle size of the second spherical filler 8 contained in the surface protective layer 7 was set to 20 µm. Other than above, a decorative sheet 10 of Example 11 was produced with the same materials/procedure as those of Example 5.

### [Example 12]

The mean particle size of the second spherical filler 8 contained in the surface protective layer 7 was set to 90 µm. Other than above, a decorative sheet 10 of Example 12 was produced with the same materials/procedure as those of Example 5.

### [Comparative Example 1]

The matte layer 5 was formed using a urethane-based resin containing a silicon-based filler in place of the ultraviolet curable resin containing a silicon-based filler. Subsequently, the surface protective layer 7 was formed using a urethane-based resin in place of the ultraviolet curable resin. Other than above, a decorative sheet 10 of Comparative Example 1 was formed with the same materials/procedure as those of Example 2.

### [Comparative Example 2]

A matte layer was formed using a mixture of a thermosetting resin and an ultraviolet curable-type resin in place of the ultraviolet curable resin. Other than above, a decorative sheet 10 of Comparative Example 2 was formed with the same materials/procedure as those of Example 2.

### [Comparative Example 3]

A matte layer was formed using an acrylic resin containing a silicon-based filler in place of the ultraviolet curable resin containing a silicon-based filler. Other than above, a decorative sheet 10 of Comparative Example 3 was formed with the same materials/procedure as those of Example 5.

### (Evaluation)

The decorative sheets 10 of Examples 1 to 12 and Comparative Examples 1 to 3 obtained by the above-described method were subjected to a flaw resistance evaluation, a contamination resistance evaluation, a tape resistance evaluation, and a sense of touch evaluation.

### [Flaw resistance evaluation]

1 cm² steel wool was arranged on the surface of the decorative sheet 10, and then moved back and forth 10 times in the same place while applying a load of 100 g to the steel wool. Thereafter, the surface condition of the decorative sheet 10 was visually observed, and evaluated using the following four scales of ⊚, ∘, Δ, ×.
⊚: Flaws and glass changes cannot be observed.
∘: Flaws cannot be observed but very slight gloss changes can be observed in a part of the tested place.
Δ: Flaws cannot be observed but gloss changes can be observed over the entire tested place.
×: In addition to gloss changes over the entire tested place, a partial loss of the pattern layer 4 can be observed.

### [Contamination resistance evaluation]

The decorative sheet 10 was subjected to a contamination resistance evaluation test according to Contamination A test specified in the Japanese Agricultural Standards (JAS). A red crayon was used as a contaminant. The red crayon was wiped off, and then the surface condition of the decorative sheet 10 was visually observed and evaluated using the following three scales of ⊚, ∘, ×.
⊚: The red crayon was not left at all.
∘: The red crayon was hardly left.
×: The red crayon was left.

### [Tape resistance evaluation]

A 24 mm wide cellulose tape (registered trademark) manufactured by NICHIBAN Co., Ltd. was stuck to the surface of the decorative sheet 10, left still in a 60°C environment for 3 days, and then sharply peeled off at an angle of 45°. Then, the surface condition of the decorative sheet 10 was visually observed and evaluated using the following two scales of ⊚, ×.
⊚: The decorative sheet surface was not peeled off.
×: The decorative sheet surface was peeled off.

### [Sense of touch evaluation]

Ten subjects were let to touch the surface of the decorative sheet with their fingers, and then the surface roughness degree was evaluated. The evaluation was performed using three scales of ⊚, ∘, ×: Smooth surface like a plate glass was evaluated as × and a feeling close to a wooden board surface was evaluated as ⊚, and the largest number of evaluations was adopted.
⊚: The subject feels that the surface is close to a wooden board surface.
∘: The subject feels that the surface is partially close to a wooden board surface.
×: The subject feels that the surface is smooth and close to a plate glass.

### (Evaluation results)

Table 1 below shows the configurations of the decorative sheets of Examples and Comparative Examples. Table 2 below shows the evaluation results of the flaw resistance, the contamination resistance, the tape resistance, and the sense of touch of Examples and Comparative Examples.

**[Table 1]**

| | Matte layer | | | | Surface protective layer | | | |
|---|---|---|---|---|---|---|---|---|
| | Resin material | Layer thickness (µm) | First spherical filler | | Resin material | Coverage (%) | Second spherical filler | |
| | | | Material | Particle size (µm) | | | Material | Particle size (µm) |
| Ex. 1 | Ultraviolet curable resin | 7.0 | Silicon-based resin | 1.0 | Ultraviolet curable resin | 20 | - | - |
| Ex. 2 | Ultraviolet curable resin | 7.0 | Silicon-based resin | 3.0 | Ultraviolet curable resin | 20 | - | - |
| Ex. 3 | Ultraviolet curable resin | 7.0 | Silicon-based resin | 8.0 | Ultraviolet curable resin | 20 | - | - |
| Ex. 4 | Ultraviolet curable resin | 7.0 | Silicon-based resin | 1.0 | Ultraviolet curable resin | 20 | Acrylic resin | 40 |
| Ex. 5 | Ultraviolet curable resin | 7.0 | Silicon-based resin | 3.0 | Ultraviolet curable resin | 20 | Acrylic resin | 40 |
| Ex. 6 | Ultraviolet curable resin | 7.0 | Silicon-based resin | 7.0 | Ultraviolet curable resin | 20 | Acrylic resin | 40 |
| Ex. 7 | Ultraviolet curable resin | 7.0 | Silicon-based resin | 8.0 | Ultraviolet curable resin | 20 | Acrylic resin | 40 |
| Ex. 8 | Ultraviolet curable resin | 7.0 | Silicon-based resin | 3.0 | Ultraviolet curable resin | 20 | Urethane-based resin | 40 |
| Ex. 9 | Ultraviolet curable resin | 7.0 | Silicon-based resin | 3.0 | Ultraviolet curable resin | 1 | Acrylic resin | 40 |
| Ex. 10 | Ultraviolet curable resin | 7.0 | Silicon-based resin | 3.0 | Ultraviolet curable resin | 95 | Acrylic resin | 40 |
| Ex. 11 | Ultraviolet curable resin | 7.0 | Silicon-based resin | 3.0 | Ultraviolet curable resin | 20 | Acrylic resin | 20 |
| Ex. 12 | Ultraviolet curable resin | 7.0 | Silicon-based resin | 3.0 | Ultraviolet curable resin | 20 | Acrylic resin | 90 |
| Comp. Ex. 1 | Urethane-based resin | 7.0 | Silicon-based resin | 3.0 | Urethane-based resin | 20 | - | - |
| Comp. Ex. 2 | Ultraviolet curable resin + Thermoplastic resin | 7.0 | Silicon-based resin | 3.0 | Ultraviolet curable resin | 20 | - | - |
| Comp. Ex. 3 | Acrylic resin | 7.0 | Silicon-based resin | 3.0 | Ultraviolet curable resin | 20 | Acrylic resin | 40 |

**[Table 2]**

| | Flaw resistance | Contamination resistance | Tape resistance | Sense of touch |
|---|---|---|---|---|
| Ex. 1 | ∘ | ⊚ | ⊚ | ∘ |
| Ex. 2 | ⊚ | ⊚ | ⊚ | ∘ |
| Ex. 3 | ∘ | ⊚ | ⊚ | ∘ |
| Ex. 4 | ∘ | ⊚ | ⊚ | ⊚ |
| Ex. 5 | ⊚ | ⊚ | ⊚ | ⊚ |
| Ex. 6 | ⊚ | ⊚ | ⊚ | ⊚ |
| Ex. 7 | ∘ | ∘ | ⊚ | ∘ |
| Ex. 8 | ⊚ | ⊚ | ⊚ | ∘ |
| Ex. 9 | Δ | ∘ | ⊚ | ∘ |
| Ex. 10 | ∘ | ∘ | ⊚ | ∘ |
| Ex. 11 | ∘ | ∘ | ⊚ | ∘ |
| Ex. 12 | ∘ | ∘ | ⊚ | ∘ |
| Comp. Ex. 1 | × | ∘ | ⊚ | × |
| Comp. Ex. 2 | Δ | × | × | × |
| Comp. Ex. 3 | × | ∘ | ⊚ | ⊚ |

As shown in Table 1, it was found from the evaluation results of Examples 1 to 12, Comparative Example 1, and Comparative Example 3 that the flaw resistance was higher in the case of using the ultraviolet curable resin for the matte layer 5 as in Examples 1 to 12 than in the case of using the urethane-based resin and the acrylic resin for the matte layer 5 as in Comparative Example 1 and Comparative Example 3, respectively.

Further, it was found from the evaluation results of Examples 1 to 12 and Comparative Example 2 that the contamination resistance and the tape resistance were higher in the case of using only the ultraviolet curable resin for the matte layer 5 as in Examples 1 to 12 than in the case of using the mixture of the thermosetting resin and the ultraviolet curable-type resin for the matte layer 5 as in Comparative Example 2.

It was found from the evaluation results obtained by comparing Examples 1 to 3 and Examples 4, 5, 7, respectively, that the addition of the filler to the surface protective layer 7 improves the sense of touch.

### Reference Signs List

- 2: base material layer (base paper layer)
- 3: base colored layer
- 4: pattern layer
- 5: matte layer
- 6: first spherical filler
- 7: surface protective layer
- 8: second spherical filler
- 9: base material for decorative plate
- 10: decorative sheet
- 20: decorative plate

## Claims

1. A decorative sheet comprising:
a base material;
a matte layer formed on one surface of the base material; and
a surface protective layer formed on a surface on a side of the matte layer of the base material, wherein
the matte layer and the surface protective layer are formed of an ultraviolet curable resin, and
the matte layer contains a first spherical filler.

2. The decorative sheet according to claim 1,
wherein a mean particle size of the first spherical filler is equal to or less than a layer thickness of the matte layer.

3. The decorative sheet according to claim 1 or 2, wherein the mean particle size of the first spherical filler is within a range of 3.0 µm or more and 7.0 µm or less.

4. The decorative sheet according to any one of claims 1 to 3, wherein the surface protective layer covers 10% or more and less than 90% of an area of the matte layer.

5. The decorative sheet according to any one of claims 1 to 4, wherein the surface protective layer contains a second spherical filler.

6. The decorative sheet according to claim 5,
wherein the second spherical filler is an acrylic filler or a urethane-based filler.

7. The decorative sheet according to claim 5 or 6, wherein a mean particle size of the second spherical filler is within a range of 40 µm or more and 80 µm or less.

8. The decorative sheet according to any one of claims 1 to 7, wherein glossiness of the matte layer is glossiness measured by a specular glossiness measurement method according to JIS Z-8741, and is 1.5 or more and 4.0 or less at an incident angle of 60°.

9. A decorative plate comprising:
a base material for decorative plate; and
the decorative sheet according to any one of claims 1 to 8 stuck to the base material for decorative plate.
